# EUROPÄISCHE PATENTSCHRIFT

(11) **EP 1 193 412 B1**
(45) Veröffentlichungstag und Bekanntmachung des Hinweises auf die Patenterteilung: **03.11.2004**
(21) Anmeldenummer: 01121147.1
(22) Anmeldetag: 04.09.2001
(51) Int. Cl.: C22C 9/01, C22C 1/04, F16C 9/04

(54) **Verwendung einer Kupfer-Aluminium-Mehrstoffbronze als Lagerwerkstoff**
Application of a copper-aluminium-based bronze as a bearing material
Application d'un bronze à base d'aluminium et de cuivre pour un palier

(30) Priorität: 27.09.2000 DE 10047775
(43) Veröffentlichungstag der Anmeldung: 03.04.2002
(73) Patentinhaber: Wieland-Werke AG, 89070 Ulm (DE)
(72) Erfinder: Feind, Jürgen, Dipl.-Ing., 89079 Ulm (DE); Ohla, Klaus, Dr., 89171 Illerkirchberg (DE); Müller, Hilmar, R. Dr.-Ing., 89287 Bellenberg (DE); Scharf, Michael, Dipl.-Ing. (FH), 89165 Dietenheim (DE)

(56) Entgegenhaltungen:
- GB-A- 1 379 261
- US-A- 2 979 397
- US-A- 5 287 623

## Beschreibung

Die Erfindung betrifft die Verwendung einer sprühkompaktierten Kupfer-Aluminium-Mehrstoffbronze als Lagerwerkstoff, der sich ohne plastische Verformung an mindestens einer Sollbruchstelle trennen und anschließend formschlüssig zusammenfügen läßt, insbes. zum Einsatz im Motorenbau.

Im Automobilbau werden Gleitelemente häufig aus Kupferwerkstoffen gefertigt, weil diese eine Reihe günstiger Eigenschaften aufweisen.

Hierzu zählen:
1. Hoher Elastizitätsmodul:
   Lagerwerkstoffe müssen unter rotierender oder oszillierender Bewegung Last aufnehmen. Punktuelle oder flächenförmige Belastungen dürfen den Werkstoff nur elastisch, nicht aber plastisch, d.h. bleibend verformen. Um elastische Verformungen auf ein Minimum zu reduzieren, sollte der Werkstoff einen möglichst hohen Elastizitätsmodul aufweisen.
2. Reibungskoeffizient/Notlaufeigenschaften:
   Reibungsverluste führen zur Verschlechterung des Gesamtwirkungsgrads und belasten die beteiligten Werkstoffe durch entstehende Wärme. Dies kann zu einer unzulässigen Temperaturerhöhung und damit verbundener Materialschwächung führen. Ausschlaggebend ist die Dauer der lokal auftretenden Wärmeeinwirkung und die Höhe der entstehenden Temperatur (Blitztemperatur). Werkstoffe mit hoher thermischer Leitfähigkeit transportieren die entstehende Wärme schnell in die umgebende Matrix und verhindern so eine unzulässige Temperaturerhöhung.
   Hochleistungslagerwerkstoffe bilden nach kurzer Laufzeit sogenannte Tribooxidationsschichten. Dabei handelt es sich um dünne Schichten, die durch Wärme und hohe Pressung über eine chemische Reaktion zur Deckschichtbildung führen. Diese meist sehr dünnen Schichten sind erwünscht, da sie durch Trennung der Laufpartner den Reibkoeffizienten herabsetzen und den Basiswerkstoff vor weiterem Verschleiß schützen.
3. Korrosionseigenschaften:
   Abgesehen von der erwünschten Bildung einer Tribooxidationsschicht sollte der Gleitlagerwerkstoff möglichst resistent gegen korrosiven Angriff sein. Idealerweise sollte sich eine Deckschicht möglichst schnell bilden, um im Anschluß daran jeden weiteren Reaktionsfortschritt zu hemmen. Eine gute Haftung zwischen Reaktionsschicht und Grundmaterial verhindert außerdem das Aufreißen der Deckschicht bei mechanischer Krafteinwirkung. Von besonderer Bedeutung ist die Korrosionsbeständigkeit in motorischen Anwendungen vor dem Hintergrund immer längerer Ölwechselintervalle.
4. Festigkeit:
   Neben der Härte spielt auch die Festigkeit des Werkstoffs an sich eine wichtige Rolle. Ständig steigende Kräfte müssen aufgenommen und die Buchse muß über den gesamten Temperatureinsatzbereich mit ausreichender Überdeckung zum Gehäuse ausgelegt werden.

Als geeignete Kupferwerkstoffe für den Motorenbau stehen bisher beispielsweise das Sondermessing CuZn31Si1 oder die Mehrstoff-Aluminium-Bronze CuAl10Ni5Fe4 zur Verfügung (vgl. beispielsweise den Wieland-Prospekt: "Buchsen für den Motorenbau" / Auflage Nov. 1998).

Diese sind hoch belastbar, korrosionsbeständig und haben nur geringe Freßneigung in Kombination mit Stahl. Beispiele hierfür sind das obere Pleuelauge, Kolbenaugenbuchsen usw.

Das Pleuel selbst wird heutzutage entweder aus einem Stück geschmiedet oder pulvermetallurgisch hergestellt, das große Pleuelauge wird anschließend entlang einer vorgegebenen Sollbruchstelle verformungslos gebrochen. In das Pleuel werden zwei Halbschalen eingelegt und die gesamte Baugruppe wird anschließend mit der Kurbelwelle verschraubt. Bedingt durch die Kurbelwellenform ist die Verwendung von Lager und Pleuel nur in diesem geteilten Zustand möglich.

Kupferwerkstoffe sind als duktile, d.h. verformungsfähige Werkstoffe bekannt. Das gewaltsame Trennen eines Werkstücks wird von einer mehr oder minder ausgeprägten Verformung begleitet. Das anschließende Zusammenfügen führt zu Passungsfehlern, die durch eine bleibende Streckung (Dehnung) im Bereich der Trennstelle hervorgerufen werden und somit diesen Einsatz ausschließen. Um Fehlpassungen zu vermeiden, darf sich der Werkstoff zwar elastisch, nicht aber plastisch verformen. Dadurch wird gewährleistet, daß die unter Krafteinwirkung erzwungene Längendehnung im Moment des Trennvorgangs vollständig rückgeführt wird.

Der Erfindung liegt daher die Aufgabe zugrunde, einen Kupferwerkstoff anzugeben, der das geforderte Eigenschaftsprofil aufweist.

Die Aufgabe wird erfindungsgemäß durch die Verwendung einer sprühkompaktierten Kupfer-Aluminium-Mehrstoffbronze gelöst, die aus 10 bis 16 % Aluminium, 1 bis 5 % Eisen, 1 bis 5 % Mangan, 1 bis 5 % Kobalt, wahlweise Silizium und/oder Blei und/oder Zinn bis jeweils max. 1 %, Rest Kupfer und üblichen Verunreinigungen besteht (die Prozentangabe bezieht sich auf das Gewicht).

Die Legierungszusammensetzung als solche ist zwar aus der US-PS 2.979.397 bekannt, allerdings nicht der beanspruchte Verwendungszweck.

Der Urformprozeß für den Lagerwerkstoff erfolgt durch Sprühkompaktieren (vgl. den sogenannten "OSPREY"-Prozeß beispielsweise nach den GB-PSen 1.379.261/1.599.392 oder EPS 0.225.732). Als Vorform bieten sich Bolzen an, die durch typische Warmformverfahren (Pressen, Walzen) zu Halbzeugfabrikaten (Stangen, Rohre, Profile) verarbeitet werden.

Bevorzugte Ausführungsformen der Erfindung ergeben sich nach den Ansprüchen 2 bis 6.

Die Erfindung wird anhand der folgenden Ausführungsbeispiele näher erläutert.
Es zeigt:
- Fig. 1: ein Foto eines gebrochenen, großen Pleuelauges,
- Fig.2: ein Foto eines erfindungsgemäßen Gleitlagers (Drehteils), das an zwei Sollbruchstellen in zwei Halbschalen gebrochen ist und
- Fig. 3: ein Foto der beiden voneinander getrennten Halbschalen nach Fig.2.

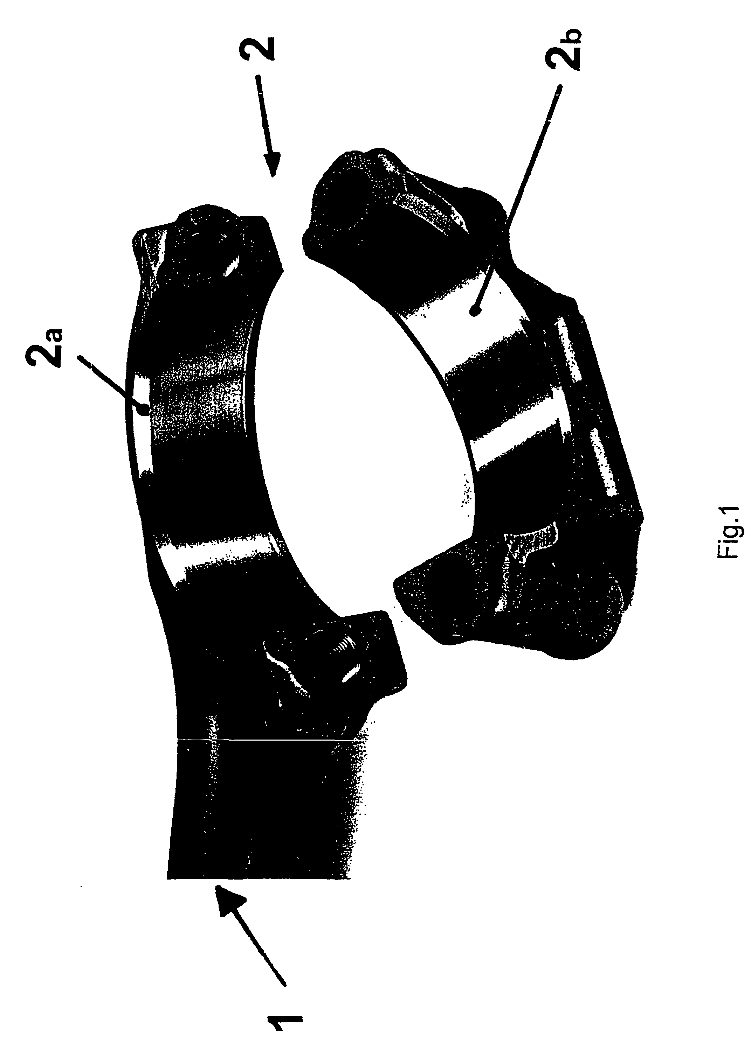

In Fig.1 ist ein Endteil eines Pleuels 1 mit gebrochenem, großen Pleuelauge 2 dargestellt.
Wie oben beschrieben, werden nach dem Stand der Technik üblicherweise zwei bereits fertiggestellte Halbschalen in die Bruchstücke 2a, 2b eingelegt. Dabei ist es erforderlich, die Halbschalen einzeln zu vermessen und passende Halbschalen einander paarweise zuzuordnen. Anschließend erfolgt die Verschraubung der gesamten Baugruppe mit der Kurbelwelle.

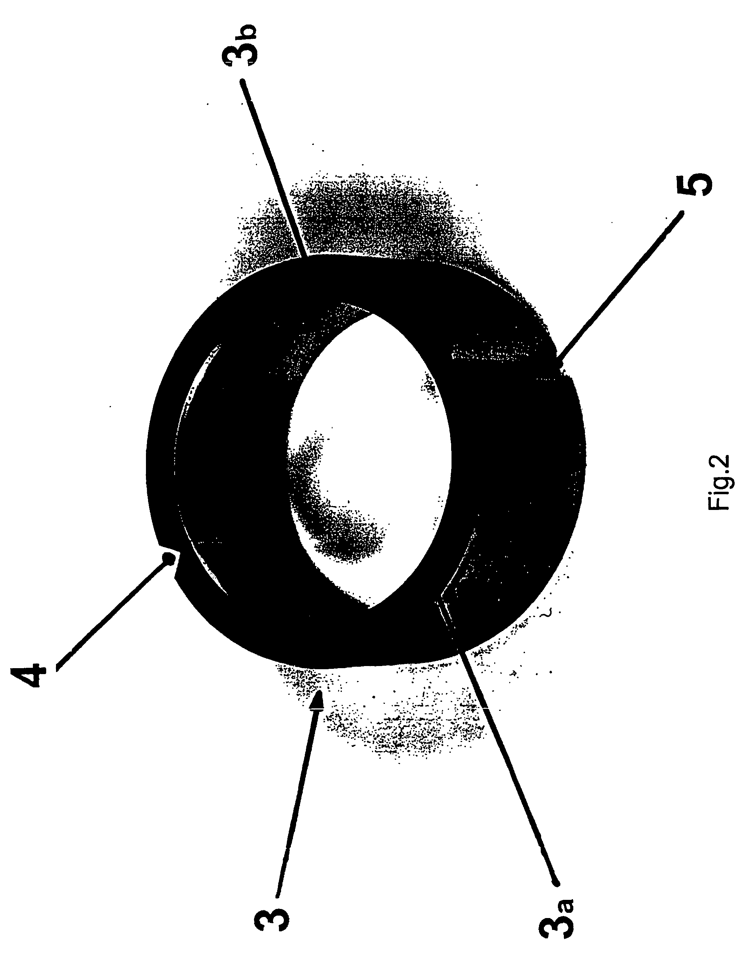

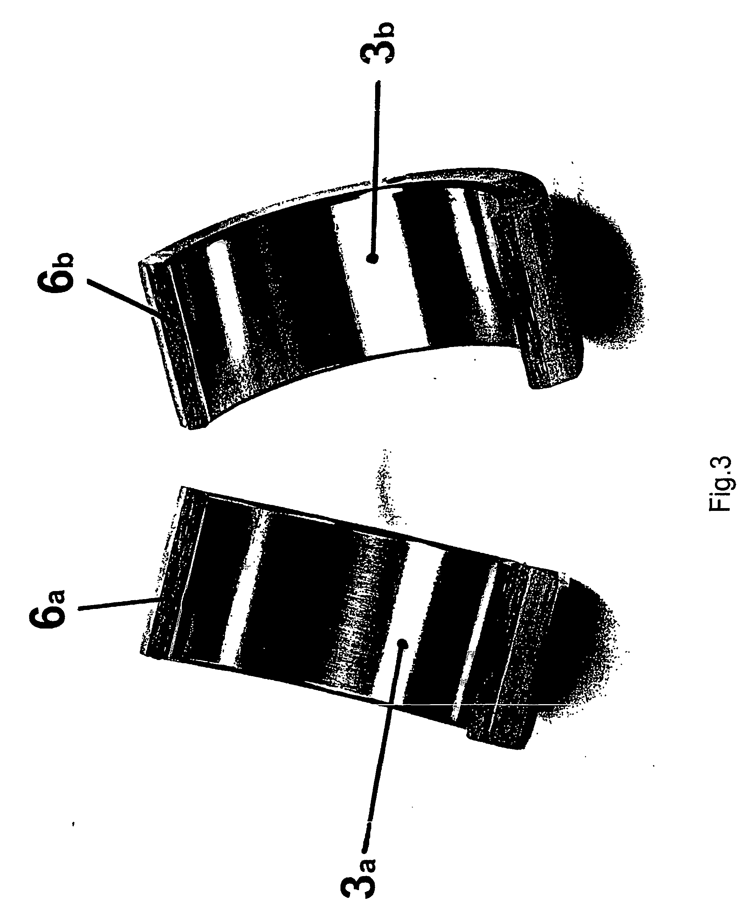

In Fig.2 ist ein erfindungsgemäßes Gleitlager 3 abgebildet, das an zwei Sollbruchstellen 4, 5 in zwei Halbschalen 3a, 3b gebrochen ist. In Fig.3 ist insbes. die Ausbildung der Bruchflächen 6a, 6b ohne plastische Deformation an den beiden Halbschalen 3a, 3b sichtbar.
Damit ist es gegenüber dem Stand der Technik möglich, den Verfahrensablauf wesentlich zu beschleunigen, indem das Gleitlager 3 in das große Pleuelauge 2 eingepreßt und auf Endmaß gebracht wird sowie Pleuel 2 und Gleitlager 3 gleichzeitig gebrochen werden. Es ergibt sich eine vorteilhafte Einsparung von Verfahrensschritten.
Abschließend erfolgt das schon beschriebene Verschrauben mit der Kurbelwelle.

## Patentansprüche

1. Verwendung einer sprühkompaktierten Kupfer-Aluminium-Mehrstoffbronze, bestehend aus 10 bis 16 % Aluminium, 1 bis 5 % Eisen, 1 bis 5 % Mangan, 1 bis 5 % Kobalt, wahlweise Silizium und/oder Blei und/oder Zinn bis jeweils max. 1 %, Rest Kupfer und üblichen Verunreinigungen, als Lagerwerkstoff, der sich ohne plastische Verformung an mindestens einer Sollbruchstelle trennen und anschließend formschlüssig zusammenfügen läßt, insbes. zum Einsatz im Motorenbau.

2. Verwendung einer Kupfer-Aluminium-Mehrstoffbronze nach Anspruch 1, bestehend aus 14,5 bis 15,2 % Aluminium, 4 bis 5 % Eisen, 1,8 bis 2,3 % Mangan, 1,8 bis 2,3 % Kobalt, Rest Kupfer und üblichen Verunreinigungen, für den Zweck nach Anspruch 1.

3. Verwendung einer Kupfer-Aluminium-Mehrstoffbronze nach Anspruch 1 oder 2, bei der eine homogene und seigerungsarme Verteilung der Legierungselemente vorliegt, für den Zweck nach Anspruch 1.

4. Verwendung einer Kupfer-Aluminium-Mehrstoffbronze nach einem oder mehreren der Ansprüche 1 bis 3, die eine mittlere Korngröße Dₖ = 50 bis 70 µm aufweist, für den Zweck nach Anspruch 1.

5. Verwendung einer Kupfer-Aluminium-Mehrstoffbronze nach einem oder mehreren der Ansprüche 1 bis 4, die eine gleichmäßige Brinell-Härte über Länge und Querschnitt im Bereich von HB 30 = 380 bis 420 aufweist, für den Zweck nach Anspruch 1.

6. Verwendung einer Kupfer-Aluminium-Mehrstoffbronze nach einem oder mehreren der Ansprüche 1 bis 5, die bei einem Bleizusatz bis max. 1 % mit einer Bleipartikelgröße < 10 µm eine feine Bleiverteilung aufweist, für den Zweck nach Anspruch 1.

## Claims

1. Use of a spray-compacted copper-aluminium multi-alloy bronze, comprising 10 to 16% aluminium, 1 to 5% iron, 1 to 5% manganese, 1 to 5% cobalt, optionally silicon and/or lead and/or tin, each up to a maximum of 1%, the remainder copper and conventional impurities, as bearing material, which is capable of being separated without plastic deformation at at least one predetermined breaking point and subsequently of being positively joined together, especially for use in motor construction.

2. Use of a copper-aluminium multi-alloy bronze according to claim 1, comprising 14.5 to 15.2% aluminium, 4 to 5% iron, 1.8 to 2.3% manganese, 1.8 to 2.3% cobalt, the remainder copper and conventional impurities, for the purpose as claimed in claim 1.

3. Use of a copper-aluminium multi-alloy bronze according to claim 1 or 2, in which the alloying elements are distributed homogeneously with little segregation, for the purpose as claimed in claim 1.

4. Use of a copper-aluminium multi-alloy bronze according to one of more of claims 1 to 3, which has a mean grain size Dₖ = 50 to 70µm, for the purpose as claimed in claim 1.

5. Use of a copper-aluminium multi-alloy bronze according to one or more of claims 1 to 4, which has a uniform Brinell hardness over length and cross-section in the range from HB 30 = 380 to 420, for the purpose as claimed in claim 1.

6. Use of a copper-aluminium multi-alloy bronze according to one or more of claims 1 to 5, which, with a lead addition of up to a maximum of 1% having a lead particle size < 10µm, has a fine lead distribution, for the purpose as claimed in claim 1.

## Revendications

1. Utilisation d'un bronze à plusieurs composants cuivre-aluminium compacté par pulvérisation, consistant en 10 à 16 % d'aluminium, 1 à 5 % de fer, 1 à 5 % de manganèse, 1 à 5 % de cobalt, au choix du silicium et/ou du plomb et/ou de l'étain jusqu'à 1 % au maximum dans chaque cas, le reste étant du cuivre et des impuretés courantes, comme matériau pour palier, qui peut être séparé puis assemblé par assemblage de forme sans déformation plastique en au moins un point destiné à la rupture, destiné en particulier à être utilisé dans la construction des moteurs.

2. Utilisation d'un bronze à plusieurs composants cuivre-aluminium selon la revendication 1 consistant en 14,5 à 15,2 % d'aluminium, 4 à 5 % de fer, 1,8 à 2,3 % de manganèse, 1,8 à 2,3 % de cobalt, le reste étant du cuivre et des impuretés courantes, pour le but selon la revendication 1.

3. Utilisation d'un bronze à plusieurs composants cuivre-aluminium selon la revendication 1 ou 2 où il existe une répartition homogène et pauvre en ségrégation des éléments de l'alliage, pour le but selon la revendication 1.

4. Utilisation d'un bronze à plusieurs composants cuivre-aluminium selon une ou plusieurs des revendications 1 à 3 qui présente une taille de grains moyenne Dₖ = 50 à 70 µm, pour le but selon la revendication 1.

5. Utilisation d'un bronze à plusieurs composants cuivre-aluminium selon une ou plusieurs des revendications 1 à 4 qui présente une dureté Brinell uniforme sur la longueur et la section transversale dans le domaine de HB 30 = 380 à 420, pour le but selon la revendication 1.

6. Utilisation d'un bronze à plusieurs composants cuivre-aluminium selon une ou plusieurs des revendications 1 à 5 qui, lors d'une addition de plomb de jusqu'à 1 % au maximum avec une taille de particules de plomb < 10 µm, présente une fine répartition du plomb, pour le but selon la revendication 1.
